# EUROPEAN PATENT APPLICATION

(11) **EP 2 723 050 A2**
(43) Date of publication of application: **23.04.2014**
(21) Application number: 13189584.9
(22) Date of filing: 21.10.2013
(51) Int. Cl.: H04M 1/725

(54) **A card reader combining a mobile device**

(30) Priority: 22.10.2012 TW 101138984
(71) Applicant: Alcor Micro, Corp., Taipei City 115 (TW)
(72) Inventor: Chang, Chi Tung, 115 Taipei City (TW); Cheng, Hao Yu, 115 Taipei City (TW)
(74) Representative: Lang, Christian

(57) **Abstract**

A card reader (1) combining a mobile device (2) applies audio interfaces (10) to transmit signal data between a card reading device (1) and a mobile device (2) via modulating and demodulating audio signals or encoding and decoding encoding signals, thereby adapting the card reader (1) to mobile devices (2) with audio jacks (200) widely and having said mobile device (2) become an electronic trading terminal for allowing the electronic trade to be fulfilled portably, anywhere, and anytime. The card reader (1) can combine an application program conducted in the mobile device (2), whereby users apply functions of the application program to easily and conveniently complete online procedures, such as purchase, trade, or payment.

## Description

### BACKGROUND OF THE INVENTION

### 1. Field of the Invention

The present invention relates to a card reader, in particular to one combining a mobile device for portably fulfilling electronic trades anywhere and anytime by applying audio interfaces to connect the card reading device with the mobile device and activate the card reading device via the mobile device.

### 2. Description of the Related Art

Nowadays many consumers adapt to purchase goods and services online through the internet, and the consumers complete the purchase, payment, and pick-up goods without going out, which makes the consuming and purchasing steps easier and more convenient, stimulates a purchase desire and an increase of consuming inclination potentially, and creates a great deal of market benefits.

However, as the current electronic trading must work with the computer equipment, it is limited and failed to be fulfilled freely, namely cannot be conducted portably, anywhere, and anytime. In recent years, intelligent mobile devices with an online function have been varying incessantly. Telecommunications usually release a coupon rate for the mobile online fee. These develop a popular mobile online trend gradually and allow the online trade and payment to become more flexible if the mobile device is set as a personal terminal connecting electronic business platforms.

Further, the online trading system usually needs to input manually or uses a card reading device to get the user information stored in account cards published by financial institutions as a proof of consumer's remittance. Through the keyboard or the screen, the manual inputting way is easily recorded by hackers. If to read the user information via a device, a card reading device is required. However, consumers require transmission wires or adapters with different pins to adapt specifications of ports due to the fact that the ports of intelligent mobile devices in the market for transmitting data are not uniform. If the port of the mobile device is not incompatible with the transmission head externally connected to the port of the card reading device, the mobile device cannot be used with the card reading device.

In light of the above problems, the inventor of the present invention researches and develops a card reading device which can be connected to the mobile device randomly for executing the data transmission. Herein, the present invention adopts the common audio jack (earphone hole) and the audio interface on the mobile device as a data transmitting interface to submit a card reader combing a mobile device which includes a card reading device and a mobile device, wherein a card-shaped carrier uses a reading of the card reading device as an electronic trading proof and the mobile device executes works, such as a computing and processing step, a transmitting and memorizing step, an interface operation, a result display, and network connection. In this manner, the components of the card reading device are decreased to attain a thin, light, and easy to carry dimension. Further, the present invention can be applied to the mobile device with characteristics of sensing touch, image capture, geographic locate, etc. to build electronic touch signature files, capture users' appearances for recognition, and record consumption locations. Therefore, an online electronic trading safety is enhanced. Further, the requisite electricity for driving the card reading device can be acquired from the mobile device, an interior power or an exterior power.

### SUMMARY OF THE INVENTION

The object of the present invention is to provide a card reader combining a mobile device. The present invention uses audio interfaces functioning as an interface for transmitting signals or data, whereby the card reader is widely adapted to mobile devices with audio jacks.

The object of the present invention is to provide a card reader combining a mobile device. The present invention uses the mobile device to fulfill application programs for electronic trades, whereby users utilize the application programs to complete the online purchase, trade or payment.

The object of the present invention is to provide a card reader combining a mobile device. The present invention applies the mobile device possessing a touch unit, an image capturing unit or a geographic locating unit to create an electronic touch signature file, capture the image to recognize the user's appearance, or record the trading location, thereby assisting the electronic trading verification and increasing the safety.

To achieve the above objects, a card reading device combining a mobile device in accordance with the present invention comprise a card reading device and a mobile device. The card reading device includes a reading unit, a micro-controlling unit (MCU), and a first audio interface. The reading unit is electrically connected to the micro-controlling unit, and the micro-controlling unit is further electrically connected to the first audio interface. The first audio interface is further electrically connected to an audio plug. The mobile device includes a second audio interface and a processing unit. An audio jack is electrically connected to the second audio interface. The second audio interface is further electrically connected to the processing unit. An application functional module of the processing unit transmits the card data to at least one server. Moreover, the audio plug is inserted into the audio jack for being coupled with each other, and the first audio interface of the card reading device is electrically connected to the second audio interface of the mobile device.

In use, the reading unit reads at least one card data from a card-shaped carrier, and the micro-controlling units transmits a first data derived from a conversion of the card data sequentially from the first audio interface, the audio plug, the audio jack, the second audio interface, and thence to the processing unit. The processing unit receives the first data, and the application functional module sends the first data or a second data derived from a conversion of the first data to a server. Wherein, the first data can be an audio signal or an encoding signal. The second data can be the card data.

The card reading device utilizes the micro-controlling unit to control the conversion and transmission of the card data between the card reading device and the mobile device. The micro-controlling unit can combine a function of a modulating unit or an encoding unit in order to modulate or encode the card data to generate the audio signal or the encoding signal. The audio signal or the encoding signal is sent from the first audio interface, the audio plug, the audio jack, the second audio interface, and thence to the processing unit. The processing unit receives the audio signal or the encoding signal and directly sends the audio signal or the encoding signal to the server. Alternatively, the processing unit demodulates or decodes the audio signal or the encoding signal via a demodulating unit or a decoding unit to restore the audio signal or the encoding signal to the card data and then sends the card data to the server. The processing unit can create a data package according to the first data or the second data and then send the data package to the server.

When the card reading device transmits signal data to the mobile device or the mobile device transmits the signal data to the server, an encryption step can be done to ensure information safety. The card reading device further includes a first encryption unit, and the micro-controlling unit encrypts the card data or the first data via the first encryption unit and sends the encrypted card data or the encrypted first data to the mobile device. The processing unit encrypts the first data or the second data via the application functional module or a second encryption unit and sends the encrypted first data or the encrypted second data to the server. Further, the mobile device further includes a decryption unit for decrypting the encrypted card data or the encrypted first data.

By the same token, the mobile device can include a modulating unit or an encoding unit, and the card reading device can include a demodulating unit or a decoding unit, thereby transmitting the signal or data from the mobile device to the card reading device.

During the manufacture of the card reading device, the reading unit is configured as an application-specific integrated circuit (ASIC), or the reading unit, the modulating/demodulating unit or the encoding/decoding unit, and the micro-controlling unit are integrated in the micro-controlling unit. The integrated micro-controlling unit can also be made via ASIC. Or the reading unit can be designed into a firmware as an element cooperating with functions of the micro-controlling unit.

The card reading device utilizes a power management unit to control the acquisition of the driving electricity. The power management unit is respectively and electrically connected to the reading unit and a power source to acquire the requisite electricity for driving the reading unit from the power source. The power source can be the mobile device. An electricity acquiring unit is respectively and electrically connected to the power management unit and the first audio interface, whereby the card reading device acquires electricity from the mobile device via the electrical connection between the first audio interface and the second audio interface. The power source can be an interior power, and the interior power can be adopted by a primary battery or a secondary battery and controlled by the power management unit to supply the reading unit with electricity. The power source can be an exterior power. The card reading device includes a port. The port includes at least one electrical pin electrically connected to the power management unit, and the port is electrically connected to the exterior power via a connecting line in order to acquire electricity from the exterior power. Further, when the interior power is a secondary battery, the exterior power is controlled by the power management unit to charge the interior power.

According to the reading criteria, the card reading device is divided into a magnetic card reading unit, a radio frequency identification reading unit, and a contact chip card reading unit or a non-contact chip card reading unit for reading card-shaped carriers, such as a magnetic card, a frequency tag card, and a contact chip card or a non-contact chip card. The application functional module utilizes the card reading device to directly obtain and display the card data from the card-shaped carrier without filling it by the user, thereby ensuring the participation of the card-shaped carrier in the electronic trading procedure, decreasing a risk of misappropriation, reducing the time of manually inputting the card data, preventing the error input, and decreasing the possibility of passwords pilfered and recorded by a Trojan program through the keyboard or the screen. Further, the reading unit can also possess a writing function for writing an updated password into the card-shaped carrier.

The mobile device further comprises a terminal unit, a memory unit, an operating unit, a display unit, an image capturing unit, a locating unit, or a vocal unit. The terminal unit, the memory unit, the operating unit, the display unit, the image capturing unit, the locating unit, or the vocal unit can be electrically connected to the processing unit, respectively.

The terminal unit can be connected to a server which provides an electronic trading platform for transmitting the first data or the second data. The first data or the second data can be encrypted for increasing the transmitting safety of the electronic trading information. The memory unit is accessed by the application function for storing related application programs or card data.

The operating unit can include a touch unit, a keying unit, a gravity sensing unit, or a gyroscope unit. An operating signal, such as a touch signal, a keying signal, a moving signal, or a rotating signal, can be generated according to user's touch actions. The operating unit sends the operating signal to the processing unit, whereby the processing unit executes the function corresponding to the operating signal. Wherein, the touch unit is configured to generate an electronic touch signature file. The application functional module sends the electronic touch signature file along with the first data or the second data to the server. The electronic touch signature file is successively compared with an electronic signature file stored in the financial institution to check whether both files are identical and confirm whether the electronic trading user is exactly the user opening an account in the financial institution.

The display unit is configured to reveal one graphical user interface (GUI) of the application program. The user can cooperate with the operating unit to use the graphical user interface. By the operating signal of the operating unit, the application functional module executes the corresponding motions to allow the user to browse online for purchasing goods or services, trading, and completing the payment. Further, the graphical user interface can include the card data obtained by the application functional module or a random graphical keyboard created by the application functional module, whereby the user inputs the password or verification code of the card-shaped carrier by using the random graphical keyboard to cooperate with the touch unit.

The image capturing unit captures an image and sends the image to the processing unit. The image can be a barcode image. The barcode image is formed by a one-dimensional barcode or a two-dimensional barcode inserted in goods catalogs or advertisements in which the user is involved. The application functional module obtains a good information or a coupon information from the server according to the barcode image. The application functional module analyzes the barcode image to attain a barcode information or directly sends the barcode image to the server for allowing the server to analyze the barcode image and attains the good information or the coupon information from the server. Therefore, the online purchase procedure is streamlined, and the electronic discount is beneficial to the consuming inclination. In addition, the image can also be an appearance image of the electronic trading user. The image along with the card data can be sent by the application functional module to the server. The image is successively compared with the appearance image stored in the financial institution to check and confirm whether the electronic trading user is exactly the user opening an account in the financial institution.

The locating unit receives and records the electronic trading locations. By communicating with a locating system, the locating unit obtains a location information. The application functional module can transmit the location information to the server and can also store the location information in the memory unit. The user can search every electronic trading location to confirm any abnormality of locations during the electronic trading activities and assist the user in checking whether others misappropriate his or her identity to run any electronic trading business.

The vocal unit is disposed to output an operating reminding voice which helps and reminds the user of an electronic trading operation.

The application functional module can comprise a browser program or a hybrid Application program, hereinafter referred to as "hybrid App". A web Application program of the server, hereinafter referred to as "web App", is read and the second data is transmitted via an execution of the web App. The application functional module can further comprise a native Application program, hereinafter referred to as "native App", fitting in with the mobile device. The web App or the native App run by the browser program or the hybrid App can be designated as a user electronic trading interface, whereby the user purchases goods, completes the trades, or disburses on the platform provided by the server.

By running the web App or the native App, the application functional module controls the other components electrically connected to the processing unit during the electronic trading procedure, captures account information, trading information, verification information or other information, such as the aforementioned card data, the electronic touch signature file, the barcode image, the user image, or the location information, and executes motions of data encryption, packaging, near or remote transmission, etc. Preferably, the hybrid App or the native App possesses a stronger ability to invoke resources of other components in the mobile device. During the electronic trading operation, the hybrid App or the native App confirms an electronic trading environment by inspecting the type of the card-shaped carrier and the frame displayed by the graphical user interface and automatically fills the card data in a place where the card data is displayed in the graphical user interface if there is no abnormality. Further, the hybrid App or the native App can be automatically activated and run when the application functional module detects the card reading device which is connected to the mobile device, thereby attaining a more convenient operation.

The server can be provided by a goods supplier, a service supplier, a shopping platform firm, a trading intermediate institution, or a third party financial institution. The user can be a buyer who connects the server of the goods supplier, the service supplier, or the shopping platform firm for purchasing and disbursing on a shopping platform of the goods supplier, the service supplier, or the shopping platform firm. The user can pay by credit card in the original shopping platform. Or the user can be led to connect to a paying platform provided by the third party financial institution for paying by transferring or other ways. The user can also be a seller who connects the server provided by the trading intermediate institution or the third party financial institution and reads the card-shaped carrier of the buyer on site for executing the disbursement.

### BRIEF DESCRIPTION OF THE DRAWINGS

- Fig**.1A**: is a flow diagram showing a concatenation of correlated elements of a first preferred embodiment of the present invention;
- Fig**.1B**: is a flow diagram showing operating steps of the first preferred embodiment of the present invention;
- Fig.**1C**: is a flow diagram showing the transmission of the signal data of the first preferred embodiment of the present invention;
- Fig.**2A**: is a flow diagram showing a concatenation of correlated elements of a second preferred embodiment of the present invention;
- Fig**.2B**: is a flow diagram showing operating steps of the second preferred embodiment of the present invention;
- Fig.**2C**: is a flow diagram showing the transmission of the signal data of the second preferred embodiment of the present invention;
- Fig.**3A**: is a flow diagram showing a concatenation of correlated elements of a third preferred embodiment of the present invention;
- Fig.**3B**: is a flow diagram showing operating steps of the third preferred embodiment of the present invention;
- Fig**.3C**: is a flow diagram showing the transmission of the signal data of the third preferred embodiment of the present invention;
- Fig.**4**: is a flow diagram showing a concatenation of correlated elements of a fourth preferred embodiment of the present invention;
- Fig**.5**: is a flow diagram showing a concatenation of correlated elements of a fifth preferred embodiment of the present invention;
- Fig.**6A**: is a flow diagram showing a concatenation of correlated elements of a sixth preferred embodiment of the present invention;
- Fig.**6B**: is a flow diagram showing operating steps of the sixth preferred embodiment of the present invention;
- Fig.**7A**: is a flow diagram showing a concatenation of correlated elements of a seventh preferred embodiment of the present invention;
- Fig.**7B**: is a flow diagram showing operating steps of the seventh preferred embodiment of the present invention;
- Fig.**7C**: is a flow diagram showing the transmission of the signal data of the seventh preferred embodiment of the present invention;
- Fig.**8A**: is a flow diagram showing a concatenation of correlated elements of an eighth preferred embodiment of the present invention;
- Fig.**8B**: is a flow diagram showing operating steps of the eighth preferred embodiment of the present invention; and
- Fig. **8C**: is a flow diagram showing the transmission of the signal data of the eighth preferred embodiment of the present invention.

### DETAILED DESCRIPTION OF THE PREFERRED EMBODIMENTS

The features and advantages of the present invention will become more apparent to those of ordinary skilled in the art upon reading the following embodiments in conjunction with explicit descriptions and accompanying drawings.

The feature of the present invention is to provide a card reader combining a mobile device which applies audio interfaces as a transmission interface between a card reading device and the mobile device, thereby adapting the card reader to mobile devices with audio jacks widely, utilizing the mobile device to complete the online purchase, trades or disbursement, generating an electronic touch signal as well as an image capturing to identify users' appearances or record trading locations, and assisting an electronic trading verification to increase the electronic trading safety.

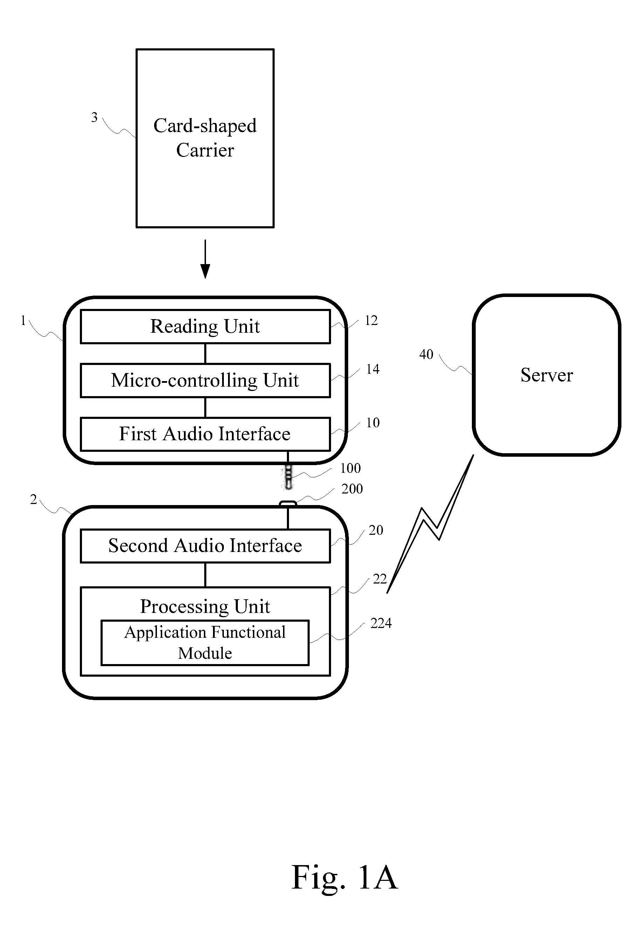

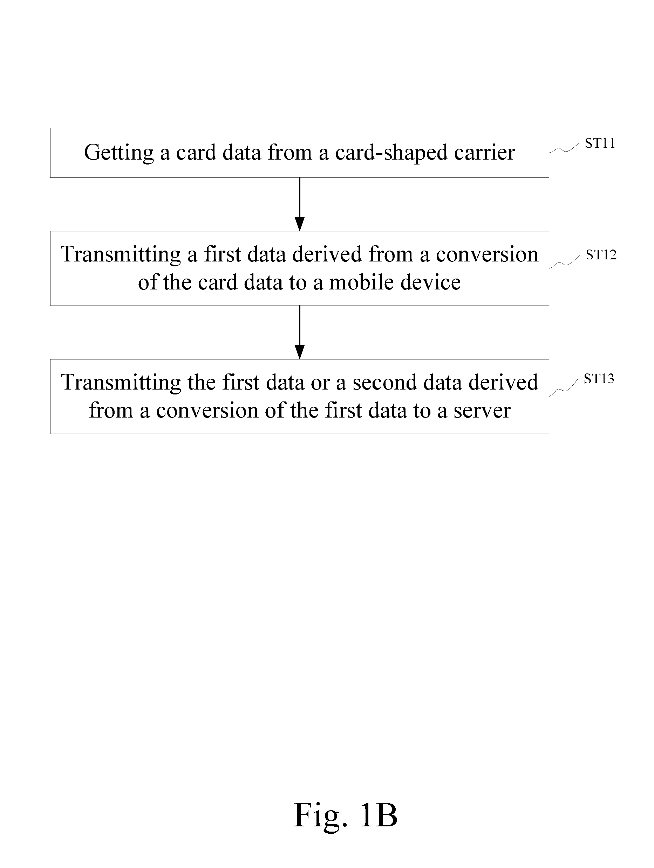

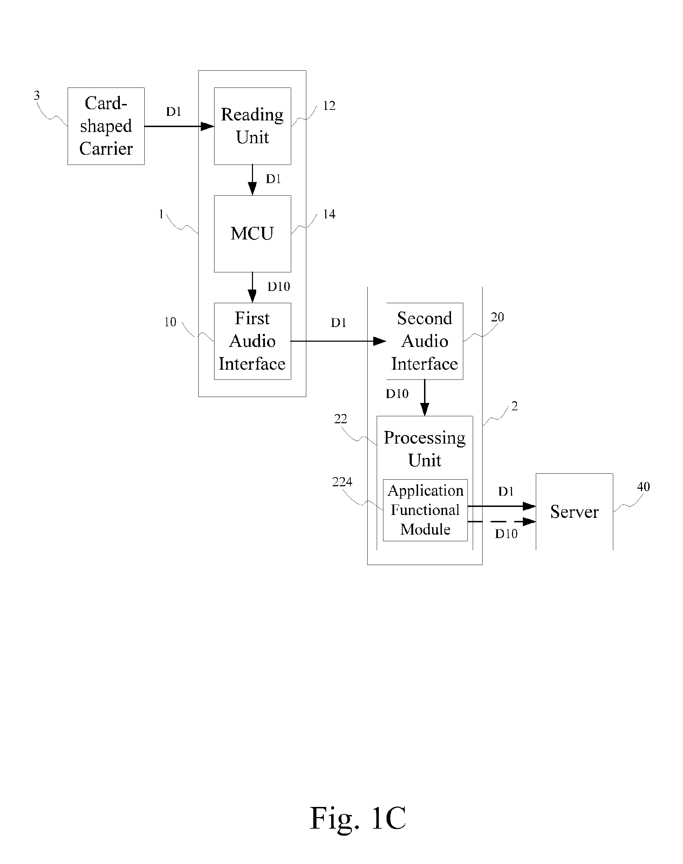

Referring to Fig. **1A****,** Fig. **1B****,** and Fig. **1C** shows a concatenation of correlated elements, operating steps, and transmission of signal data of the first preferred embodiment of the present invention. As shown in Fig. **1A****,** a card reader combining a mobile device of the present invention comprises a card reading device **1** and a mobile device **2.** The card reading device **1** includes an audio plug **100,** a first audio interface **10,** a reading unit **12,** and a micro-controlling unit **14.** The micro-controlling unit **14** is electrically connected to the reading unit **12,** the first audio interface **10** is electrically connected to the micro-controlling unit **14,** and the audio plug **100** is electrically connected to the first audio interface **10.** The mobile device **2** includes an audio jack **200,** a second audio interface **20,** and a processing unit **22.** The second audio interface **20** is electrically connected to the audio jack **200.** The processing unit **22** is electrically connected to the second audio interface **20.** The processing unit **22** includes an application functional module **224,** wherein the audio jack **200** is inserted by and coupled with the audio plug **100,** so that the card reading device **1** is electrically connected to the mobile device **2.** In addition, a card-shaped carrier **3** contacts the card reading device **1.** A server **40** and the mobile device **2** are wirelessly communicated with each other.

Further referring to Fig. **1B** and Fig. **1C****,** Fig. **1B** shows an operation of this preferred embodiment including:
a step **ST11** for getting a card data from a card-shaped carrier;
a step **ST12** for transmitting a first data derived from a conversion of the card data to a mobile device; and
a step **ST13** for transmitting the first data or a second data derived from a conversion of the first data to a server.

As shown in Fig. **1C**, in the step **ST11,** the reading device **1** applies the reading unit **12** to read at least one card data **D1** from the card-shaped carrier **3.** In the step **ST12,** the card data **D1** is converted into a first data **D10** by the micro-controlling unit **14** and sent to the mobile device **2** by the first audio interface **10.** In the step **ST13,** the processing unit **22** receives the first data **D10** via the second audio interface **20** which is electrically connected to the first audio interface **10,** and an application functional module **224** of the processing unit **22** further sends the first data **D10** or a second data (namely the card data **D1** in this embodiment) attained by using the processing unit **22** to convert the first data to a server **40.**

According to the arrangement of the above elements and operating steps, the card reader combining the mobile device in this embodiment applies the reading unit 12 to obtain the card data **D1** from the card-shaped carrier **3** and transmits the first data **10** derived from the conversion of the card data **D1** between the reading device **1** and the mobile device **2** by means of the electrical connection between the first audio interface **10** and the second audio interface **20** through the configuration of the audio plug **100** and the audio jack **200.** Further, the application functional module **224** sends the first data **D10** or the card data **D1** derived from the conversion of the first Data **10** to the server **40,** whereby various trading activities can be carried out via using the conversion of the first data **D10** into the card data **D1** or directly using the card data **D1.**

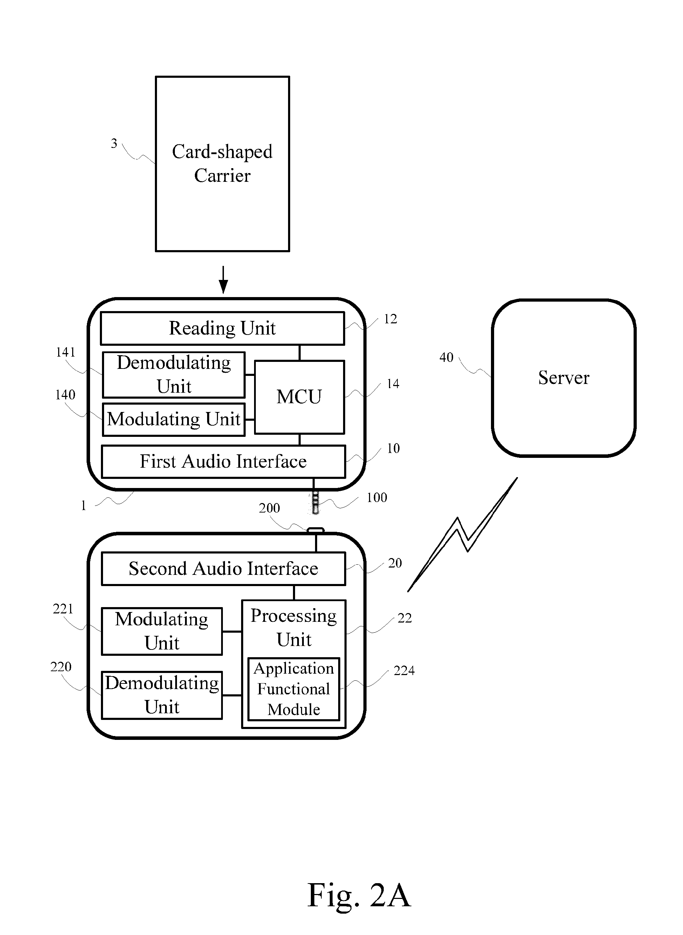

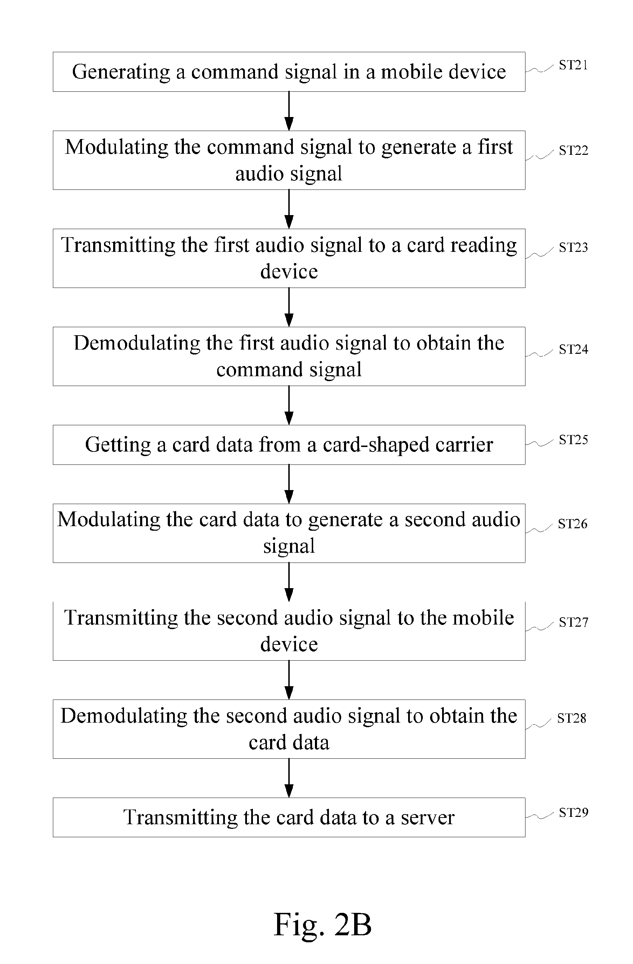

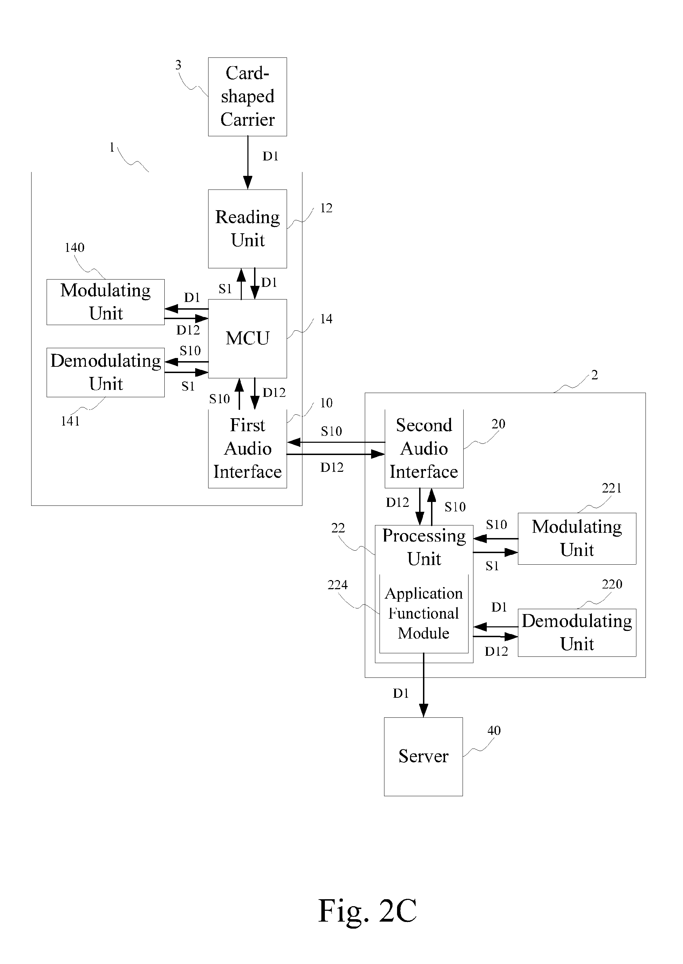

Referring to Fig. **2A****,** Fig. **2B****,** and Fig. **2C** shows a concatenation of correlated elements, operating steps, and transmission of signal data of the second preferred embodiment of the present invention. As shown in Fig. **2A****,** the difference between this preferred embodiment and the first preferred embodiment is that the card reading device **1** in this embodiment further includes a modulating unit **140** and a demodulating unit **141.** The modulating unit **140** and the demodulating unit **141** are electrically connected to the micro-controlling unit **14,** respectively. The mobile device 2 further includes a demodulating unit **220** and a modulating unit **221.** The demodulating unit **220** and the modulating unit **221** are electrically connected to the processing unit **22,** respectively. With respect to other elements and the connection thereof, please refer to the first preferred embodiment.

Further referring to Fig. **2B** and Fig. **2C****,** Fig. **2B** shows an operation of this preferred embodiment including:
a step **ST21** for generating a command signal in a mobile device;
a step **ST22** for modulating the command signal to generate a first audio signal;
a step **ST23** for transmitting the first audio signal to a card reading device;
a step **ST24** for demodulating the first audio signal to obtain the command signal;
a step **ST25** for getting a card data from a card-shaped carrier;
a step **ST26** for modulating the card data to generate a second audio signal;
a step **ST27** for transmitting the second audio signal to the mobile device;
a step **ST28** for demodulating the second audio signal to obtain the card data; and
a step **ST29** for transmitting the card data to a server.

As shown in Fig. **2C****,** in the step **ST21,** the processing unit **22** creates a command signal **S1.** In the step **ST22,** the processing unit **22** modulates the command signal **S1** via the modulating unit **221** to obtain a first audio signal **S10.** In the step **ST23,** the first audio signal **S10** is passing through the second audio interface **20** for being transmitted from the mobile device **2** to the card reading device **1.** The micro-controlling unit **14** receives the first audio signal **S10** via the first audio interface **10** which is electrically connected to the second audio interface **20.** In the step **ST24,** the micro-controlling unit **14** demodulates the first audio signal **S10** via the demodulating unit **141** to obtain the command signal **S1.** In the step **ST24,** the micro-controlling unit **14** transmits the command signal **S1** to the reading unit **12** and activates the reading unit **12** to read a card data **D1** from the card-shaped carrier 3. In the step **ST26,** after the reading unit **12** transmits the card data **D1** to the micro-controlling unit **14,** the micro-controlling unit **14** modulates the card data **D1** via the modulating unit **140** to obtain a second audio signal **D12** (namely the first data). In the step **ST27,** the second audio signal **D12** is sent to the mobile device **2** via the first audio interface **10.** The processing unit **22** receives the second audio signal **D12** via the second audio interface **20** which is electrically connected to the first audio interface **10.** In the step **ST28,** the processing unit **22** demodulates the second audio signal **D12** via the demodulating unit **220** to obtain the card data **D1** (namely the second data). In the step **ST29,** the application functional module **224** transmits the card data **D1** to a server **40.**

According to the arrangement of the above elements and operating steps, the card reader combining the mobile device in this embodiment applies a command signal **S1** created by the processing unit **22** to render the reading unit **12** able to acquire the card data **D1** from the card-shaped carrier **3.** During the operation, the two modulating units **140, 221** and the two demodulating units **220, 141** respectively modulate the command signal **S1** and the card data **D1** to obtain the first audio signal **S10** and the second audio signal **D12** and thereafter demodulate to restore these signals to the command signal **S1** and the card data **D1** through an electrical connection between the first audio interface **10** and the second audio interface **20** functioning as a medium of signal data transmission between card reading device **1** and the mobile device **2.** Finally, the application functional module **224** sends the card data **D1** to the server **40,** whereby various trading activities are carried out by using the card data **D1.**

Furthermore, the step **ST28** and step **ST29** of this embodiment can be replaced with a step **ST280** (not shown in the figure). The step **ST280** is to transmit the second audio signal to a server. In the step **ST280,** the application functional module **224** directly transmits the second audio signal **D12** to the server **40.** Subsequently, the second audio signal **D12** is demodulated at the server **40** to obtain the card data **D1.** The card data **D1** is then used to execute various trading activities.

The audio interfaces can not only transmit the audio signals but the encoding signals. Besides a modulation/demodulation mode, the present invention can also apply an encode/decode mode to process and transmit the signal data via the audio interfaces, which is described in the next preferred embodiment.

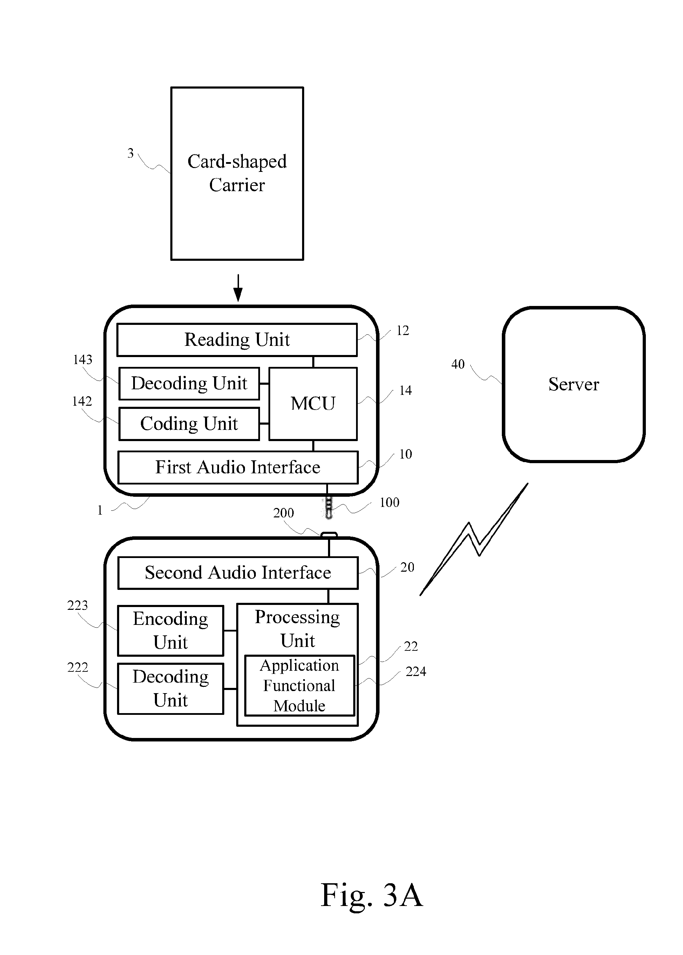

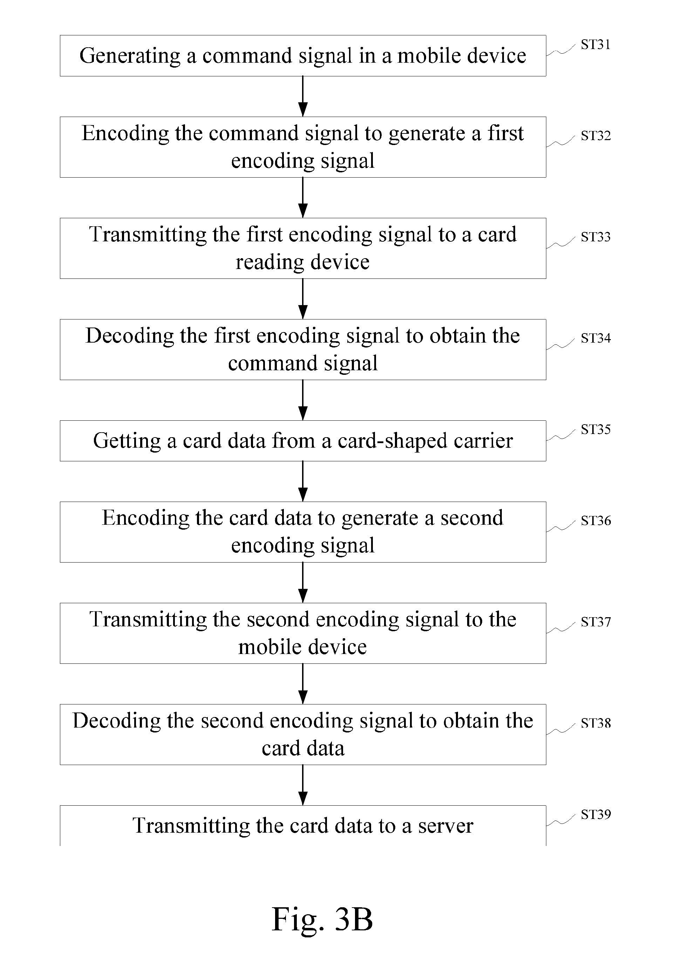

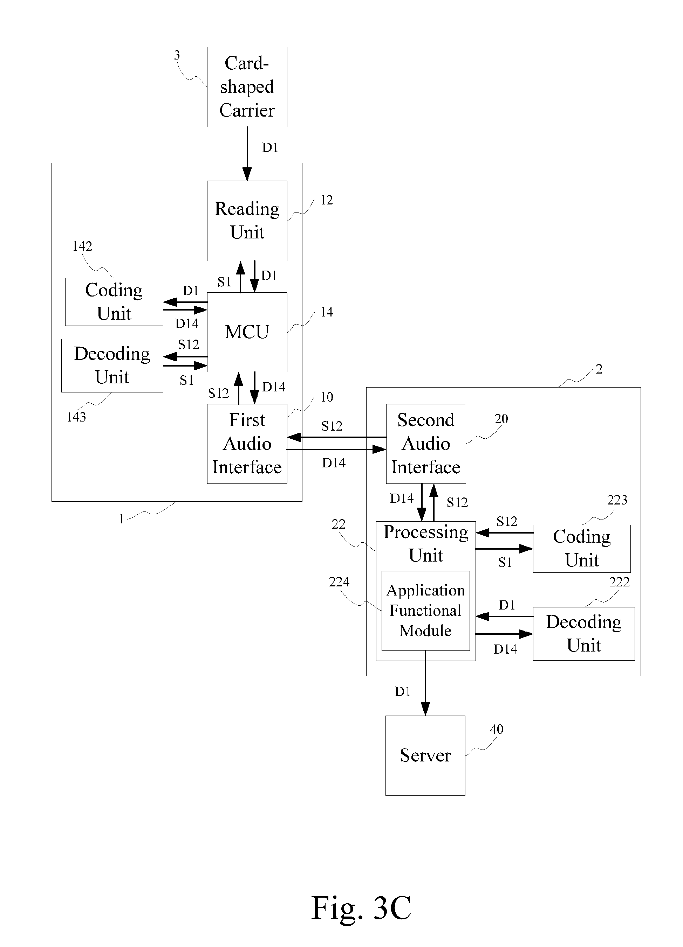

Referring to Fig. **3A****,** Fig. **3B****,** and Fig. **3C** shows a concatenation of correlated elements, operating steps, and transmission of signal data of the third preferred embodiment of the present invention. As shown in Fig. **3A****,** the difference between this preferred embodiment and the second preferred embodiment is that the card reading device **1** of this embodiment includes an encoding unit **142** and a decoding unit **143** to replace the modulating unit **140** and the demodulating unit **141.** The encoding unit **142** and the decoding unit **143** are respectively and electrically connected to the micro-controlling unit **14.** The mobile device **2** includes a decoding unit **222** and an encoding unit **223** to replace the demodulating unit **220** and the modulating unit **221.** The decoding unit **222** and the encoding unit **223** are respectively and electrically connected to the processing unit **22.** With respect to other elements and the connection thereof, please refer to the second preferred embodiment.

Further referring to Fig. **3B** and Fig. **3C****,** Fig. **3B** shows an operation of this preferred embodiment including:
a step **ST31** for generating a command signal in a mobile device;
a step **ST32** for encoding the command signal to generate a first encoding signal;
a step **ST33** for transmitting the first encoding signal to a card reading device;
a step **ST34** for decoding the first encoding signal to obtain the command signal;
a step **ST35** for getting a card data from a card-shaped carrier;
a step **ST36** for encoding the card data to generate a second encoding signal;
a step **ST37** for transmitting the second encoding signal to the mobile device;
a step **ST38** for decoding the second encoding signal to obtain the card data; and
a step **ST39** for transmitting the card data to a server.

As shown in Fig. **3C****,** the difference between this embodiment and the second embodiment is that in the step **ST32,** the processing unit **22** applies the encoding unit **223** to encode the command signal **S1** into a first encoding signal **S12.** In the step **ST34,** the micro-controlling unit **14** applies the decoding unit **143** to decode the first encoding signal **S12** into the command signal **S1.** In the step **ST36,** after the reading unit **12** transmits the card data **D1** to the micro-controlling unit **14,** the micro-controlling unit **14** applies the encoding unit **142** to encode the card data **D1** into a second encoding signal **D14** (namely the first data). In the step **ST38,** the processing unit 22 applies the decoding unit **222** to decode the second encoding signal **D14** into the card data **D1** (namely the second data). With regard to the descriptions related to the steps **ST31, ST33, ST35, ST37, and ST39,** please refer to the steps **ST21, ST23, ST25, ST27, and ST29** described in the second preferred embodiment.

Furthermore, the step **ST38** and step **ST39** of this embodiment can be replaced with a step **ST380** (not shown in the figure). The step **ST380** is to transmit the second encoding signal to a server. In the step **ST380,** the application functional module **224** directly transmits the second encoding signal **D14** to the server **40.** Subsequently, the second encoding signal **D14** is decoded into the card data **D1** at the server **40.** The card data **D1** is thence used to execute various trading activities.

The above preferred embodiments describe the correlated elements and operating steps for transmitting the signal data of the present invention. The present invention further comprises the elements functioning as an electricity supplier, described as follows:

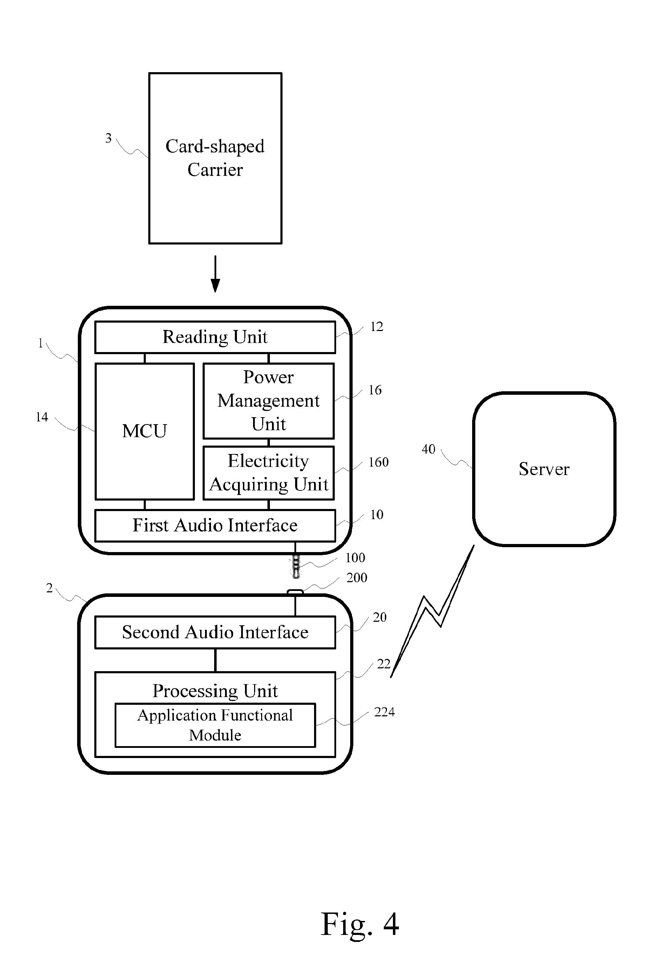

Referring to Fig. **4** shows a concatenation of correlated elements of the fourth preferred embodiment of the present invention. As shown in the figure, the difference between this preferred embodiment and the first preferred embodiment is that the card reading device **1** in this embodiment further comprises a power management unit **16.** The power management unit **16** is electrically connected to the reading unit **12,** an electricity acquiring unit **160** is electrically connected to the power management unit **16,** and the first audio interface **10** is electrically connected to the electricity acquiring unit **160,** thereby forming an electrical communication by which the mobile device 2 can supply the card reading device **1** with electricity. With respect to other elements and the connection thereof, please refer to the first preferred embodiment.

In this preferred embodiment, the operating steps for transmitting signal data and the transmission are the same as the first preferred embodiment and herein are omitted. The power management unit **16** acquires the electricity for activating the card reading device **1** by using the electricity acquiring unit **160** to seek electricity from the mobile device **2** through the first audio interface **10** and the second audio interface **20** and supplies the acquired electricity to the reading unit **12.**

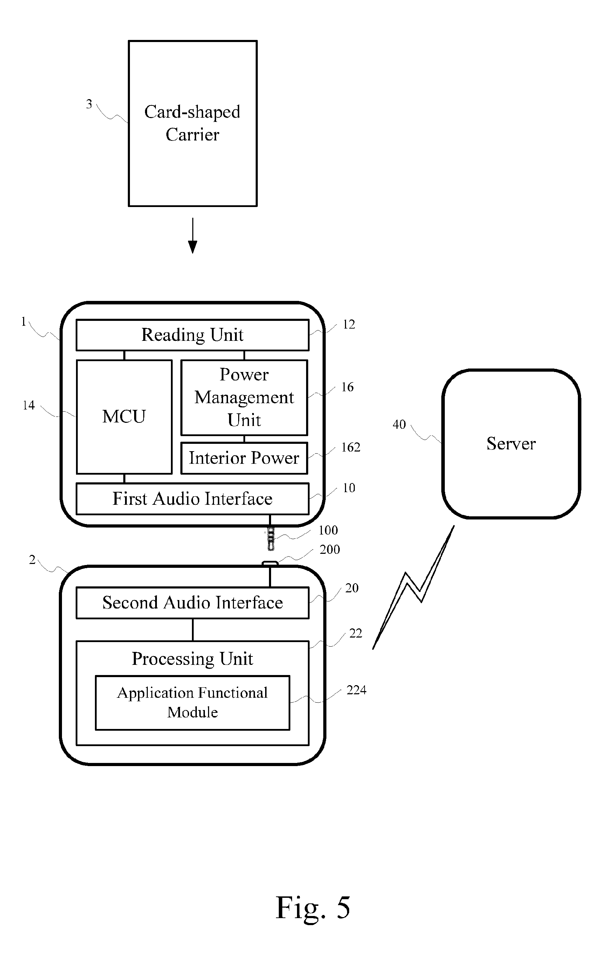

Referring to Fig. **5** shows a concatenation of correlated elements of the fifth preferred embodiment of the present invention. As shown in the figure, the difference between this preferred embodiment and the fourth preferred embodiment is that this embodiment includes an interior power **162** electrically connected to the power management unit **16** to replace the electricity acquiring unit **160** which is electrically connected to the power management unit **16** and the first audio interface **10.** With respect to other elements and the connection thereof, please refer to the fourth preferred embodiment.

In this preferred embodiment, the operating steps for transmitting signal data and the transmission are the same as the first preferred embodiment. The power management unit **16** acquires the electricity for activating the card reading device **1** from the interior power **162** and supplies the acquired electricity to the reading unit **12;** wherein the interior power **162** can be a primary battery or a secondary battery. When the interior power **162** runs out of the electricity, the interior power **162** can be substituted or charged additionally.

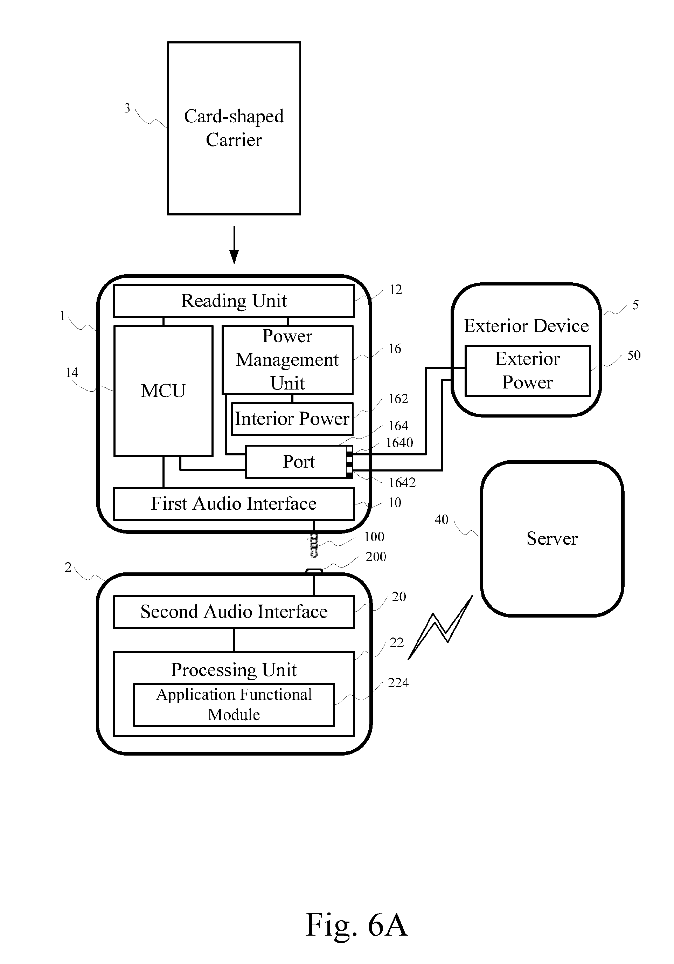

Referring to Fig. **6A** shows a concatenation of correlated elements of the sixth preferred embodiment of the present invention. As shown in the figure, the difference between this preferred embodiment and the fourth preferred embodiment is that the card reading device **1** further includes a port **164.** At least one electrical pin **1640** of the port **164** is electrically connected to power management unit **16.** The port **164** further includes at least one transmitting pin **1642** electrically connected to the micro-controlling unit **14.** Furthermore, an exterior device 5 is electrically connected to the port **164.** The exterior device **5** includes an exterior power **50.** With respect to other elements and the connection thereof, please refer to the fifth preferred embodiment

In this preferred embedment, the power management unit **16** takes the electricity for activating the card reading device **1** from the interior power **162** and supplies the acquired electricity to the reading unit **12.** Alternatively, the power management unit **16** applies the electrical pin **1640** of the port **164** to take the electricity from the exterior power **50** and supplies the electricity to the reading unit **12.** The interior power **162** can be a primary battery or a secondary battery. When the interior power **162** in the form of a secondary battery runs out of the electricity, the power management unit **16** supplies the electricity taken from the exterior power **50** to the interior power **162,** thereby charging the interior power **162.** The port **164** can be a USB, an abbreviation for "universal serial bus", and can be convenient to connect to the exterior device **5** via a connecting line with a USB male head.

In this preferred embodiment, the operating steps for transmitting the signal data are the same as the first preferred embodiment. The transmission of the signal data can not only be sent to the mobile device **2** via the audio interfaces **10, 20** but be sent to the exterior device **5** via the port **164.**

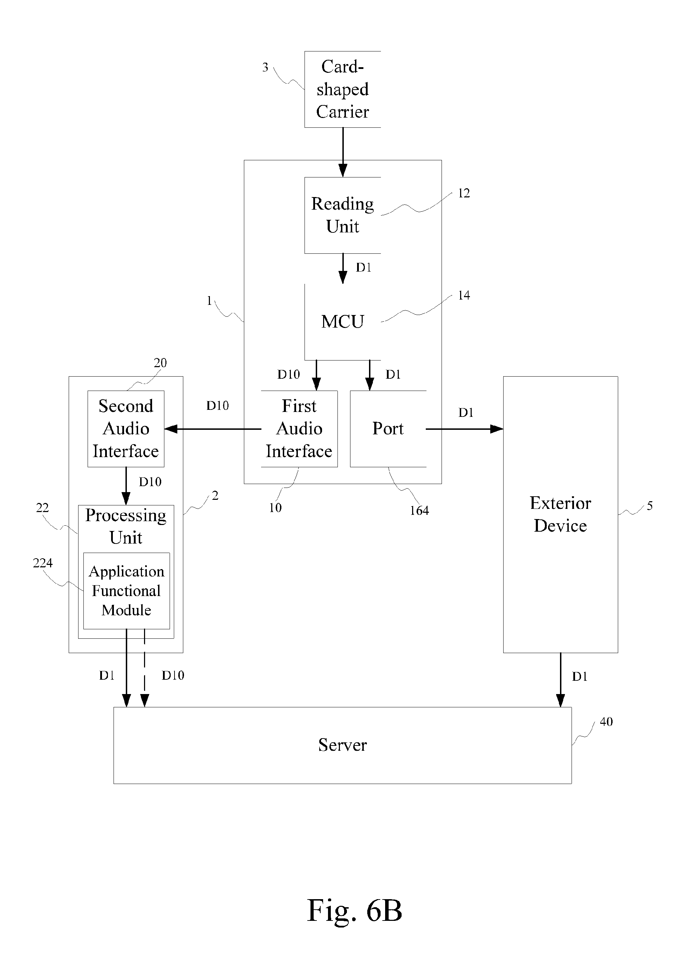

Referring to Fig. **6B** shows the transmission of the signal data of the sixth preferred embodiment of the present invention. As shown in the figure, the signal data at the left part is sent from a card reading device **1** to a mobile device **2** via the two audio interfaces **10, 20** and then sent from the mobile device **2** to a server **40.** The card reading device **1** applies the reading unit **12** to read at least one card data **D1** from the card-shaped carrier **3** (as described in the step **ST11** of Fig. **1B****).** The first data **D10** derived from the conversion of the card data **D1** is transmitted to the mobile device **2** through the micro-controlling unit **14** and the first audio interface **10** (as described in the step **ST12** of Fig. **1B****).** The processing unit **22** receives the first data **D10** via the second audio interface **20** which is electrically connected to the first audio interface **10,** and an application functional module **224** of the processing unit **22** transmits the first data **D10** or a second data derived from the conversion of the first data **D10** (namely the card data **D1** in this embodiment) to a server **40** (as described in the step **ST13** of Fig. **1B****).** The signal data at the right part is sent from the card reading device **1** to an exterior device **5** via a port **164** and then sent from the exterior device **5** to a server **40.** The card reading device **1** applies the reading unit **12** to read the card data **D1** from the card-shaped carrier **3** (as described in the step **ST11** of Fig. **1B****).** The card data **D1** is sent to the exterior device **5** through the micro-controlling unit **14** and the port **164** without being converted (as described in the step **ST12** of Fig. **1B****).** The exterior device **5** receives the card data **D1** and sends the card data **D1** to a server **40** (as described in the step **ST13** of Fig. **1B****),** whereby the card data **D1** is used to execute various trading activities.

Therefore, the card reading device **1** of this preferred embodiment can disconnect the mobile device **2** but connect to the exterior device 5 directly, whereby it can be adapted to various mobile devices and exterior devices widely to attain the purpose of fulfilling the electronic trading activity portably, anywhere, and anytime.

Besides the aforementioned elements for transmitting signal data and controlling the electricity supply, the card reader combining the mobile device in accordance with the present invention further includes a terminal unit, an image capturing unit, a memory unit, a display unit, a touch unit, a locating unit, or a vocal unit disposed inside the mobile device to complete the electronic trading procedure, which is described in conjunction with the seventh and the eighth preferred embodiments of the present invention.

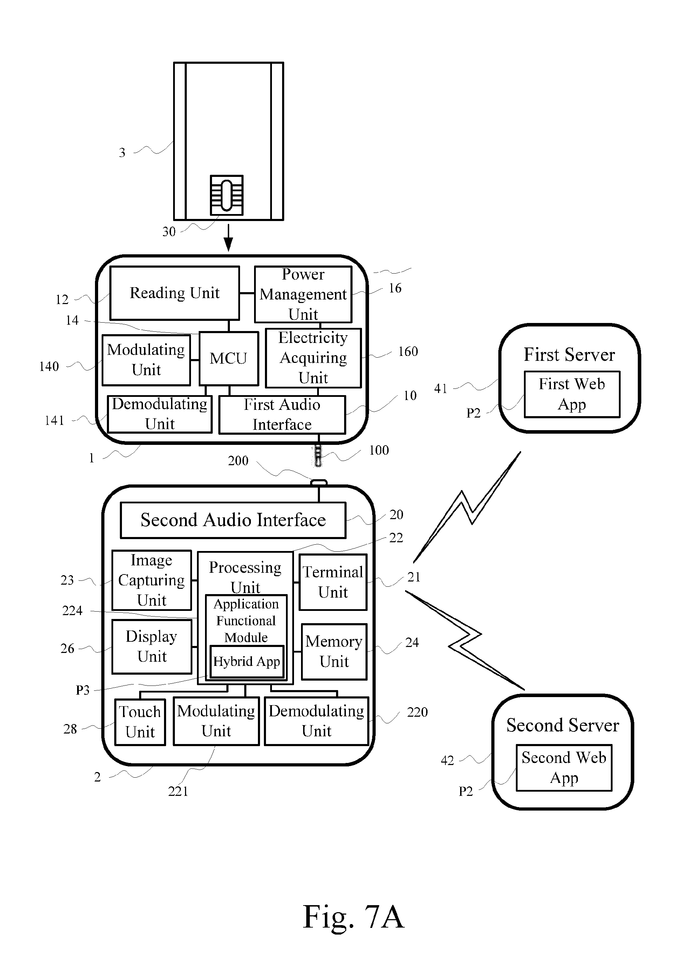

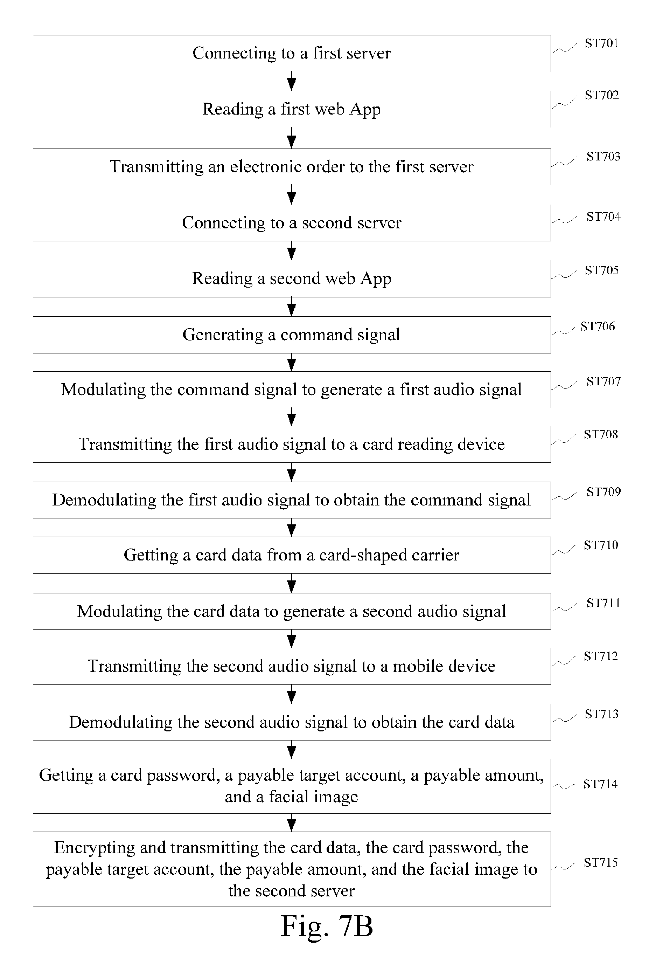

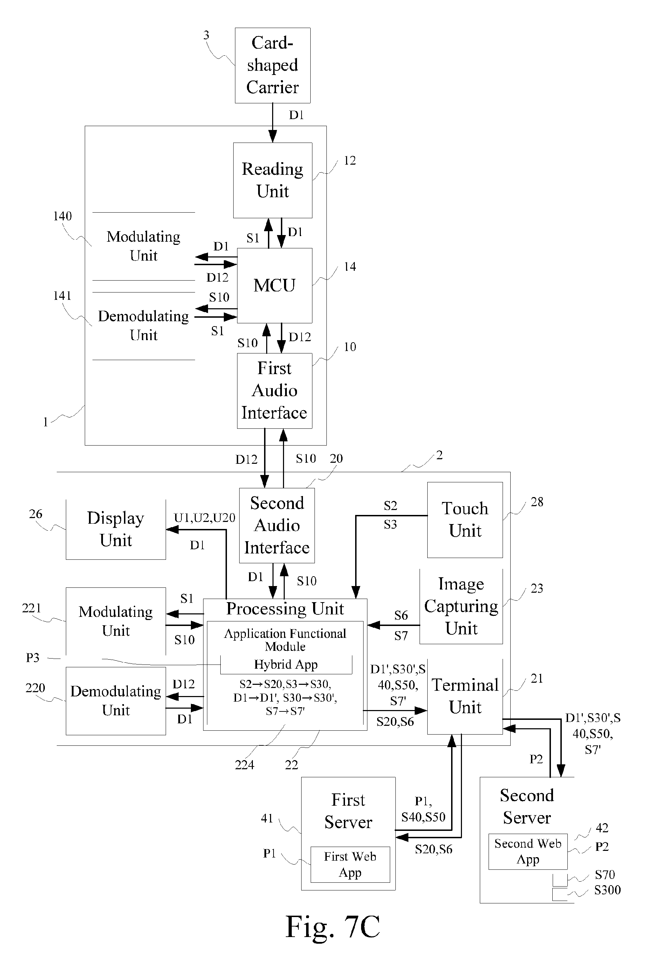

Referring to Fig. **7A****,** Fig. **7B****,** and Fig. **7C** shows a concatenation of correlated elements, operating steps, and transmission of signal data of the seventh preferred embodiment of the present invention. As shown in Fig. **7A****,** a card reader combining a mobile device of the present invention comprises a card reading device **1** and a mobile device **2.** The card reading device **1** mainly includes a first audio interface **10,** a reading unit **12,** a micro-controlling unit **14,** and a power management unit **16.** The micro-controlling unit **14** is electrically connected to the reading unit **12,** the first audio interface **10** is electrically connected to the micro-controlling unit **14,** and an audio plug **100** is electrically connected to the first audio interface **10.** The micro-controlling unit **14** is electrically connected to a modulating unit **140** and a demodulating unit **141,** respectively. The power management unit **16** is electrically connected to the reading unit **12,** the electricity acquiring unit **160** is electrically connected to the power management unit **16,** and the first audio interface **10** is electrically connected to the power management unit **16.** The mobile device **2** includes a second audio interface **20,** a terminal unit **21,** a processing unit **22,** an image capturing unit **23,** a memory unit **24,** a display unit **26,** and a touch unit **28.** An audio jack **200** is electrically connected to the second audio interface **20,** and the audio plug **100** is inserted into the audio jack **200** in order to attain an electrical connection between the card reading device 1 and the mobile device **2.** The second audio interface **20** is electrically connected to the processing unit **22,** and the processing unit **22** is electrically connected to a demodulating unit **220,** a modulating unit **221,** the terminal unit **21,** the image capturing unit **23,** the memory unit **24,** the display unit **26,** and the touch unit **28,** respectively. Further, the processing unit **22** includes an application functional module **224,** and the application functional module **224** includes a hybrid App **P3.** In addition, a card-shaped carrier **3** is inserted into the card reading device **1,** and a contact chip **30** of the card-shaped carrier **3** is in contact with the reading unit **12.** A first server **41** and a second server **42** are wirelessly communicated with the mobile device **2,** respectively. The first server **41** includes a first web App **P1,** and the second server **42** includes a second web App **P2.** In this preferred embodiment, the reading unit **12** is a contact chip card reading unit. The card-shaped carrier **3** is a financial card belonging to a contact chip card.

As shown in Fig. **7B****,** the operation that the user uses the card reader combining the mobile device in accordance with this embodiment in order to purchase goods online, confirm the trading procedure, and complete a transfer payment includes:
a step **ST701** for connecting to a first server;
a step **ST702** for reading a first web App;
a step **ST703** for transmitting an electronic order to the first server;
a step **ST704** for connecting to a second server;
a step **ST705** for reading a second web App;
a step **ST706** for generating a command signal;
a step **ST707** for modulating the command signal to generate a first audio signal;
a step **ST708** for transmitting the first audio signal to a card reading device;
a step **ST709** for demodulating the first audio signal to obtain the command signal;
a step **ST710** for getting a card data from a card-shaped carrier;
a step **ST711** for modulating the card data to generate a second audio signal;
a step **ST712** for transmitting the second audio signal to a mobile device;
a step **ST713** for demodulating the second audio signal to obtain the card data;
a step **ST714** for getting a card password, a payable target account, a payable amount, and a facial image; and
a step **ST715** for encrypting and transmitting the card data, the card password, the payable target account, the payable amount, and the facial image to the second server.

As shown in Fig. **7C****,** in the step **ST701,** the user applies the terminal unit **21** to connect to a first server **41** providing a shopping platform. In the step **ST702,** a hybrid App **P3** of the application functional module **224** reads a first web App **P1** from the first server **41.** A first graphical user interface **U1** of the first web App **P1** is displayed on the display unit **26.** In the step **ST703,** the user operates the first web App **P1** via using the touch unit **28** cooperating with the first graphical user interface **U1** to browse goods or services published in the shopping platform. After the user selects and purchases at least one good or service and confirms the electronic trade, the application functional module **224** generate an electronic order **S20** according to a first touch signal **S2** generated by the touch unit **28** which is used by the user and applies the hybrid App **P3** and the first web App **P1** to transmit the electronic order **S20** to the first server **41** through the wireless communication built by the terminal unit **21.**

After generating the electronic order **S20,** the user disburses the payable amount of the electronic order **S20** by transferring online. In the step **ST704,** the user connects to a second server **42** provided by a third party financial institution via the terminal unit **21.** In the step **ST705,** the hybrid App **P3** of the application functional module **224** reads a second web App **P2** from the second server **42.** A second graphical user interface **U2** of the second web App **P2** is displayed on the display unit **26,** whereby the user touches the touch unit **28** which cooperates the second graphical user interface **U2** for operating the second web App **P2.** In the step **ST706,** the second web App **P2** reminds the user to insert the card-shaped carrier 3 into the card reading device **1** and generates a command signal **S1.** In the step **ST707,** the processing unit **22** modulates the command signal **S1** via the modulating unit **221** to obtain a first audio signal **S10.** In the step **ST708,** the processing unit **22** transmits the first audio signal **S10** to the card reading device **1** via the second audio interface **20** and the first audio interface **10.** In the step **ST709,** the micro-controlling unit **14** demodulates the first audio signal **S10** via the demodulating unit **141** to obtain the command signal **S1.**

In the step **ST710,** the micro-controlling unit **14** activates the reading unit **12** to read a card data **D1** from the contact chip **30** according to the command signal **S1,** wherein the card data is a financial card number of the card-shaped carrier **3.** In the step **ST711,** the micro-controlling unit **14** modulates the card data **D1** via the modulating unit **140** to generate a second audio signal **D12.** In the step **ST712,** the micro-controlling unit **14** transmits the second audio signal **D12** to the mobile device **2** through the first audio interface **10** and the second audio interface **20.** In the step **ST713,** the processing unit **22** demodulates the second audio signal **D12** via the demodulating unit **220** to obtain the card data **D1.**

In the step **ST714** and step **ST715,** the application functional module **224** captures the card data **D1,** fills the card data **D1** in the second graphical user interface **U2,** generates a random graphical keyboard **U20,** and renders the second graphical user interface **U2** including the random graphical keyboard **U20** to be displayed on the display unit 26. The user can apply the touch unit **28** to generate a second touch signal **S3** through the random graphical keyboard **U20,** thereby inputting a card password **S30** of the card-shaped carrier **3.** In this preferred embodiment, the processing unit **22** is configured to convert the second touch signal **S3** into the card password **S30,** and the application functional module **224** is configured to encrypt the card password **S30** for getting an encrypted card password **S30'** and transmit the encrypted card password **S30'** to the second server **42** for executing a remote verification. The second server **42** decrypts the encrypted card password **S30'** to obtain the card password **S30** which is thence compared with a password record **S300.** Further, the micro-controlling unit **14** is also used to verify the card password **S30** nearby. The application functional module **224** needs not only the card password **S30** for verification but the payable target account and payable amount which, in this preferred embodiment, can be acquired by using the image capturing unit **23** to shoot a barcode image **S6** which is then transmitted to the first server **41** via the application functional module **224** to receive a payable target account **S40** or a payable amount **S50** sent back by the first server **41.** Alternatively, the second graphical user interface **U2** reminds the user to apply the touch unit **28** for generating a third touch signal **S4** or a fourth touch signal **S5** (not shown in the figure), which can be converted into the payable target account **S40** or the payable amount **S50** via the application functional module **224.** Alternatively, the application functional module **224** captures the payable target account **S40** or the payable amount **S50** through the first server **41.** Alternatively, the second server **42** gets the payable target account **S40** or the payable amount **S50** from the first server **41,** and the application functional module **224** collects, encrypts and transmits the card data **D1,** the card password **S30,** the payable target account **S40** and the payable amount **S50** of the card-shaped carrier **3** for the online transfer trade. In addition, in this preferred embodiment, the second web App **P2** further reminds the user to shoot the user's face via the image capturing unit **23** and generates a facial image **S7.** Thereafter, the application functional module **224** encrypts the card data **D1** and the facial image **S7** to get an encrypted card data D1' and an encrypted facial image **S7'** and transmits the encrypted card data **D1',** the payable target account **S40,** the payable amount **S50,** and the encrypted facial image **S7'** to the second server **42** to complete the online transfer payment. Furthermore, the payable target account **S40** and the payable amount **S50** or the aforementioned electronic order **S20** can be encrypted in advance before the transmission, thereby promoting and ensuring the electronic trading safety preferably.

Subsequently, the second server **42** can decrypt the encrypted card data **D1'** and the encrypted facial image **S7'** to obtain the card data **D1** and the facial image **S7** and compares the facial image **S7** with a facial image record **S70** of the user stored in the second server **42** to see if they are consistent and determine if the payment is successful. Or only the facial image **S7** is stored for determination. Using the image capturing unit **23** to shoot the facial image **S7** of the user for recognition or determination assists in checking whether the electronic trading user and the user opening an account in the financial institution are the same, thereby increasing the electronic trading safety.

Furthermore, in this preferred embodiment, the power management unit **16** applies the electricity acquiring unit **160** to acquire the electricity for driving the card reading device **1** during the trading procedure from the mobile device **2** through the first audio interface **10** and the second audio interface **20,** and the power management unit **16** supplies the acquired electricity to the reading unit **12.**

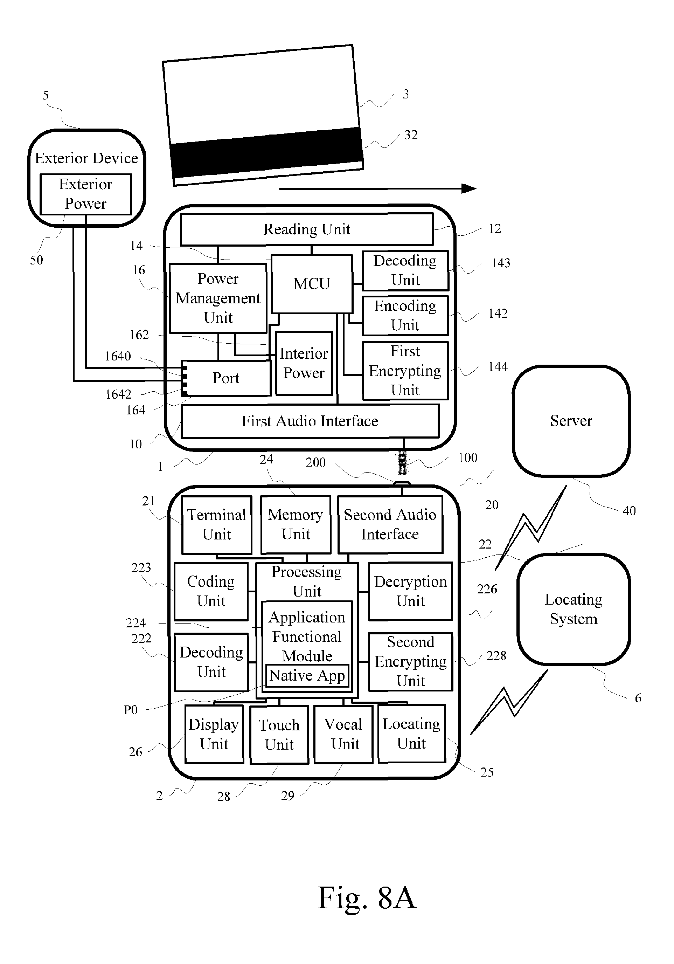

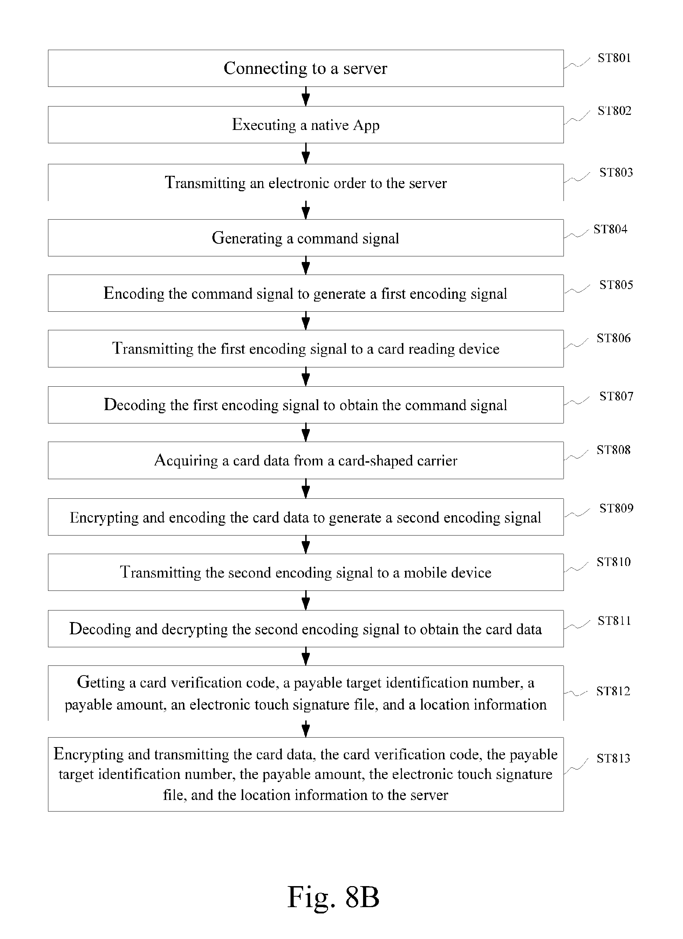

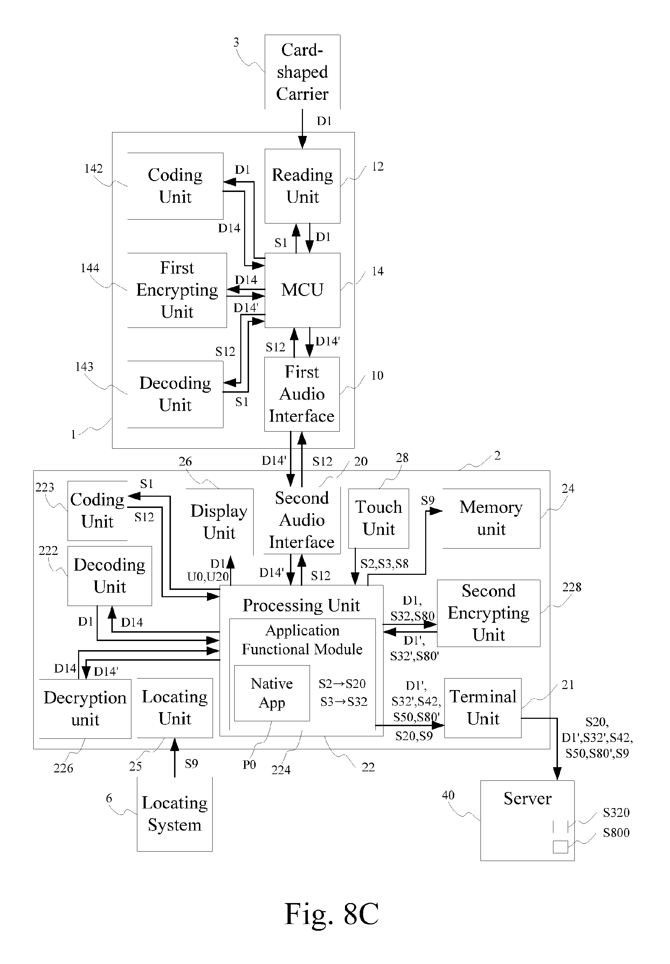

Referring to Fig. **8A****,** Fig. **8B****,** and Fig. **8C** shows a concatenation of correlated elements, operating steps, and transmission of signal data of the eighth preferred embodiment of the present invention. As shown in Fig. **8A**, a card reader combining a mobile device of the present invention comprises a card reading device **1** and a mobile device **2.** The card reading device **1** mainly includes a first audio interface **10,** a reading unit **12,** a micro-controlling unit **14,** and a power management unit **16.** The micro-controlling unit **14** is electrically connected to the reading unit **12,** the first audio interface **10** is electrically connected to the micro-controlling unit **14,** and an audio plug **100** is electrically connected to the first audio interface **10.** The micro-controlling unit **14** is electrically connected to an encoding unit **142,** a decoding unit **143,** and a first encrypting unit **144,** respectively. Further, the power management unit **16** is electrically connected to the reading unit **12,** an interior power **162,** and at least one electrical pin **1640** of a port **164.** The port **164** further includes at least one transmitting pin **1642** which is electrically connected to the micro-controlling unit **14.** The mobile device **2** includes a second audio interface **20,** a terminal unit **21,** a processing unit **22,** a memory unit **24,** a locating unit **25,** a display unit **26,** a touch unit **28,** and a vocal unit **29.** An audio jack **200** is electrically connected to the second audio interface **20,** and the audio plug **100** is inserted into the audio jack **200** in order to attain an electrical connection between the card reading device **1** and the mobile device **2.** The second audio interface **20** is electrically connected to the processing unit **22,** and the processing unit **22** is electrically connected to a decoding unit **222,** an encoding unit **223,** a decryption unit **226,** a second encryption unit **228,** the terminal unit **21,** the memory unit **24,** the locating unit **25,** the display unit **26,** the touch unit **28,** and the vocal unit **29,** respectively. Further, the processing unit **22** includes an application functional module **224,** and the application functional module **224** includes a native App **P0**. In addition, a card-shaped carrier **3** contacts the reading unit **12** of the card reading device **1** via a magnetic stripe **32** thereof. A server **40** and a locating system **6** are respectively and wirelessly communicated with the mobile device **2.** In this preferred embodiment, the reading unit **12** is a magnetic card reading unit, and the card-shaped carrier **3** is a credit card belonging to a magnetic card.

Fig. 8B shows an operation of the card reader combining the mobile device in accordance with this preferred embodiment to purchase goods online, confirm the trading step, and complete a credit card payment including:
a step **ST801** for connecting to a server;
a step **ST802** for executing a native App;
a step **ST803** for transmitting an electronic order to the server;
a step **ST804** for generating a command signal;
a step **ST805** for encoding the command signal to generate a first encoding signal;
a step **ST806** for transmitting the first encoding signal to a card reading device;
a step **ST807** for decoding the first encoding signal to obtain the command signal;
a step **ST808** for acquiring a card data from a card-shaped carrier;
a step **ST809** for encrypting and encoding the card data to generate a second encoding signal;
a step **ST810** for transmitting the second encoding signal to a mobile device;
a step **ST811** for decoding and decrypting the second encoding signal to obtain the card data;
a step **ST812** for getting a card verification code, a payable target identification number, a payable amount, an electronic touch signature file, and a location information; and
a step **ST813** for encrypting and transmitting the card data, the card verification code, the payable target identification number, the payable amount, the electronic touch signature file, and the location information to the server.

As shown in Fig. **8C****,** in the step **ST801,** the user applies the terminal unit **21** to connect to a server **41** providing a shopping platform. In the step **ST802,** a native App **P0** of the application functional module **224** is run, and a graphical user interface **U0** of the native App **P0** is displayed on the display unit **26.** In the step **ST803,** the user operates the native App **P0** via the touch unit **28** which cooperates with the graphical user interface **U0** to browse goods or services published in the shopping platform. After the user selects and purchases at least one good or service and confirms the electronic trade, the application functional module **224** generate an electronic order **S20** according to a first touch signal **S2** generated by the touch unit **28** which is used by the user and applies the native App **P0** to transmit the electronic order **S20** to the server **40** through the wireless communication built by the terminal unit **21.**

After generating the electronic order **S20,** the user disburses the payable amount of the electronic order **S20** by credit card. In the step **ST804,** the native App **P0** reminds the user to slide the magnetic stripe **32** of the card-shaped carrier **3** along a slot noticeably formed on the card reading device **1** and generates a command signal **S1.** The interior of the slot is the reading unit **12.** In the step **ST805,** the processing unit **22** applies the encoding unit **223** to encode the command signal **S1** into a first encoding signal **S12.** In the step **ST806,** the processing unit **22** transmits the first encoding signal **S12** to the card reading device **1** via the second audio interface **20** and the first audio interface **10.** In the step **ST807,** the micro-controlling unit **14** decodes the first encoding signal **S12** via the decoding unit **143** to obtain the command signal **S1.**

In the step **ST808,** the micro-controlling unit **14** activates the reading unit **12** according to the command signal **S1** when the user slides the magnetic stripe **32** across the reading unit **12,** whereby a card data **D1** is read by the magnetic stripe **32.** Wherein, the card data is the credit card number and valid time of the card-shaped carrier **3.** In the step **ST809,** the micro-controlling unit **14** encodes the card data **D1** via the encoding unit **142** to generate a second encoding signal **D14** and encrypts the second encoding signal **D14** via the first encryption unit **144** to get an encrypted second encoding signal **D14'**. In the step **ST810,** the micro-controlling unit **14** transmits the encrypted second encoding signal **D14'** to the mobile device **2** through the first audio interface **10** and the second audio interface **20.** In the step **ST811,** the processing unit **22** decrypts the encrypted second encoding signal **D14'** via the decryption unit **226** to obtain the second encoding signal **D14** and decodes the second encoding signal **D14** via the decoding unit **222** to obtain the card data **D1.**

In the step **ST812,** the application functional module **224** captures the card data **D1,** fills the card data **D1** in the graphical user interface **U0,** generates a random graphical keyboard **U20,** and renders the graphical user interface **U0** including the random graphical keyboard **U20** to be displayed on the display unit **26.** The user can apply the touch unit **28** to generate a second touch signal **S3** through the random graphical keyboard **U20,** thereby inputting a card verification code **S32** of the card-shaped carrier **3.** The processing unit **22** converts the second touch signal **S3** into the card verification code **S32.** After getting the card verification code **S32,** the application functional still needs to get the payable target identification number or the payable amount which, in this preferred embodiment, can be acquired by using the server **40** to capture the payable target identification number **S42** or the payable amount **S50.** Alternatively, the graphical user interface **U0** reminds the user to generate a third touch signal **S4** or a fourth touch signal **S5** via the touch unit **28,** which can be thence converted into the payable target identification number **S42** or the payable amount **S50** via the application functional module 224. Alternatively, the user applies an image capturing unit **23** to shoot a barcode image **S6** (not shown in this figure, please refer to Fig.**7C**) and get the payable target identification number **S42** or the payable amount **S50** via the server **41,** and the application functional module **224** collects, encrypts and transmits the card data **D1,** the card verification code **S32,** the payable target identification number **S42** and the payable amount **S50** of the card-shaped carrier **3** for the online credit card trade. In addition, in this preferred embodiment, the native App **P0** further reminds the user to make an electronic signature via the touch unit **28.** The user generates a fifth touch signal **S8** while touching the touch unit **28,** the application functional module **224** converts the fifth touch signal **S8** into an electronic touch signature file **S80,** and the locating unit **25** attains a locating information **S9** via wirelessly communicating to a locating system **6.** In the step **ST813,** the application functional module **224** applies the second encryption unit **228** to encrypt the card data **D1,** the card verification code **S32,** and the electronic touch signature file **S80** to get an encrypted card data **D1',** an encrypted card verification code **S32',** and an encrypted electronic touch signature file **S80'**. The application functional module **224** transmits the encrypted card data **D1',** the encrypted card verification code **S32',** the payable target identification number **S42,** the payable amount **S50,** the encrypted electronic touch signature file **S80',** and the locating information **S9** to the server **40,** thereby completing an online credit card payment. Further, the payable target identification number **S42,** the payable amount **S50,** and the locating information **S9** or the aforementioned electronic order **S20** can be encrypted in advance before the transmission to greatly ensure the electronic trading safety.

Subsequently, the server **40** can timely decrypt the encrypted card data **D1'**, the encrypted card verification code **S32'**, and the encrypted electronic touch signature file **S80'** to obtain the card data **D1,** the card verification code **S32,** and the electronic touch signature file **S80** and compares the card verification code **S32** or the electronic touch signature file **S80** with a verification code record **S320** or an electronic signature file record **S800** stored in the server **40** for checking whether they are consistent and determining whether the payment is successful. Or only the electronic touch signal file **S80** is stored for determination. Using the touch unit **28** to generate the electronic touch signature file **S80** for recognition or determination assists in checking whether the electronic trading user and the user opening an account in the financial institution are the same, thereby increasing the electronic trading safety. Moreover, the application functional module **224** further saves the locating information **S9** in a memory unit **24,** whereby the user can search every electronic trading location via connecting to the server **40** or via the memory unit **24** directly.

In addition, in this preferred embodiment, the power management unit **16** acquires the electricity for driving the card reading device **1** during the trading procedure from the interior power **162,** and the power management unit **16** supplies the acquired electricity to the reading unit **12.** The interior power **162** can be a primary battery or a secondary battery. When the interior power **162** runs out of the electricity, at least one electrical pin **1640** of the port **164** can be connected to an exterior power **50** of an exterior device **5,** whereby the exterior power **50** is used to supply the electricity to the card reading device **1** and charge the interior power **162** at the same time. The port **164** can be a USB port for being conveniently connected to an exterior device **5.** The transmitting pin **1642** of the port **164** is electrically connected to the reading unit **12,** so the card reading device **1** in this preferred embodiment can disconnect the mobile device **2** but connect to the exterior device **5** for using.

Therefore, the distinctions between this preferred embodiment and the seventh preferred embodiment are different types of the reading units **12** and the card-shaped carriers **3** and different places where the power management unit **16** acquires electricity. Further, this preferred embodiment transmits the command signal **S1** and the card data **D1** by using the encoding/decoding mode to replace the modulating/demodulating mode. This embodiment further includes an encryption/decryption step when the card reading device **1** transmits the second encoding signal **D14** to the mobile device and uses a second encryption unit **224** to encrypt the card data transmitted to the server, which is also different from the seventh embodiment making use of the application functional module **224.** The application functional module of this preferred embodiment utilizes a native App **P0** to attain the requisite trading functions, different from the seventh embodiment which attains the trading functions by using a hybrid App **P3** to execute the web Apps **P1** and **P2.** The hybrid App **P3** in the seventh embodiment can also be replaced by a browser program, whereas the browser program cannot easily attain the function of generating the command signal automatically or filling in the card data due to its lower ability of invoking the functions of near elements. This preferred embodiment can also combine the contact chip card reading unit as described in the seventh embodiment, whereby the card reading device **1** can read the contact chip card and the magnetic card concurrently for a broad range of various card trades. Further, this preferred embodiment further includes the vocal unit **29** for reminding the user of operating procedures by speaking during the trade and assisting the user having poor eyesight or the unlettered user in completing the electronic trading activity.

Besides the touch unit **28** described in the seventh and the eighth preferred embodiments, the operating unit of the mobile device **2** can also include a keying unit, a gravity sensing unit, or a gyroscope unit to generate a keying signal, a moving signal or a rotating signal. The operating unit can send the operating signal to the processing unit to allow the processing unit to fulfill the functions corresponding to the operating signal.

In addition, the above seventh and eighth embodiments set the user as the buyer. The present invention can also set the user as the seller. In use, the seller can connect to a server provided by a trading medium institution or a third party financial institution, read the card-shaped carrier provided by the buyer on site, and use an authorized billing platform provided by the trading medium institution or the third party financial institution to charge the buyer. The facial image, the verification code, and the electronic signature file record can also be used as an enhanced verification tool, and the locating information can be recorded for follow-up reference.

To sum up, the card reader combining the mobile device in accordance with the present invention uses audio interfaces to transmit signal data between a card reading device and a mobile device via modulating and demodulating audio signals or encoding and decoding encoding signals, thereby adapting the card reader to mobile devices with audio jacks widely and having the mobile device become an electronic trading terminal for allowing the electronic trade to be fulfilled portably, anywhere, and anytime. The card reader can combine an application program conducted in the mobile device, whereby users apply functions of the application program to easily and conveniently complete online purchase, trades or payment and use the mobile device possessing the touch sensing function, image capturing function, and geographic locating function to design an auxiliary electronic trading verification system, thereby increasing the electronic trading safety.

## Claims

1. A card reader combining a mobile device comprising:
a card reading device further including:
a reading unit for reading at least one card data from a card-shaped carrier;
a micro-controlling unit electrically connected to said reading unit; and
a first audio interface electrically connected to said micro-controlling unit and an audio plug, respectively; and
a mobile device further including:
a second audio interface electrically connected to an audio jack, said audio jack being coupled with said audio plug for transmitting a first data derived from a conversion of said card data; and
a processing unit electrically connected to said second audio interface, said processing unit including an application functional module, and said application functional module transmitting said first data or a second data derived from a conversion of said first data to at least one server.

2. The card reader combining the mobile device as claimed in claim 1, wherein said first data is an audio signal, and said second data is said card data; said card reading device further includes a modulating unit, and said mobile device further includes a demodulating unit; said micro-controlling unit modulates said card data by said modulating unit for generating said audio signal, and said processing unit receives said audio signal and demodulates said audio signal by said demodulating unit for acquiring said card data.

3. The card reader combining the mobile device as claimed in claim 1, wherein said first data is an encoding signal, and said second data is said card data; said card reading device further includes an encoding unit, and said mobile device further includes a decoding unit; said micro-controlling unit encodes said card data by said encoding unit for generating said encoding signal, and said processing unit receives said encoding signal and decodes said encoding signal by said decoding unit for acquiring said card data.

4. The card reader combining the mobile device as claimed in claim 1, wherein said card reading device further includes a first encryption unit, and said micro-controlling encrypts said card data or said first data by said first encryption unit.

5. The card reader combining the mobile device as claimed in claim 1, wherein said mobile device further includes a second encryption unit, and said micro-controlling unit encrypts said first data or said second data by said second encryption unit or said application functional module.

6. The card reader combining the mobile device as claimed in claim 1, wherein said card reading device further includes a power management unit; said power management unit is electrically connected to said reading unit, and said audio interface allows said reading unit to be supplied with electricity from said mobile device, from an interior power electrically connected to said power management unit, or from an exterior power to which a port electrically connected to said power management unit is externally connected.

7. The card reader combining the mobile device as claimed in claim 1, wherein said mobile device further includes an operating unit, said operating unit is electrically connected to said processing unit for transmitting at least one operating signal to said processing unit; said application functional module converts said operating signal into an electronic touch signal file and sends said electronic touch signal file to said server.

8. The card reader combining the mobile device as claimed in claim 1, wherein said mobile device further includes an image capturing unit, said image capturing unit is electrically connected to said processing unit for capturing an image and sending said imaging to said processing unit.

9. The card reader combining the mobile device as claimed in claim 8, wherein said image is a user image.

10. The card reader combining the mobile device as claimed in claim 1, wherein said mobile device further includes a locating unit, said locating unit is connected to a locating system for getting a location information; said application functional module sends said location information to said server.

11. The card reader combining the mobile device as claimed in claim 1, wherein said mobile device further includes a display unit, said display unit is electrically connected to said processing unit for displaying a graphical user interface.

12. The card reader combining the mobile device as claimed in claim 11, wherein said graphical user interface includes a random graphical keyboard generated by said application functional module.

13. The card reader combining the mobile device as claimed in claim 1, wherein said mobile device further includes a display unit, said display unit is electrically connected to said processing unit for displaying a graphical user interface; said application functional module further includes a hybrid Application program or a native Application program, said hybrid Application program or said native Application program detects said card-shaped carrier and said graphical user interface and fills said card data in the said graphical user interface.

14. The card reader combining the mobile device as claimed in claim 1, wherein said application functional module further includes a browser program or a hybrid Application program, said browser program or said hybrid Application program reads a web Application program by said server and sends said second data to said server by an execution of said web Application program.
